# EUROPEAN PATENT SPECIFICATION

(11) **EP 1 783 762 B1**
(45) Date of publication and mention of the grant of the patent: **16.11.2011**
(21) Application number: 06017437.2
(22) Date of filing: 22.08.2006
(51) Int. Cl.: G11B 17/028

(54) **Optical disk drive**
Optisches Plattenlaufwerk
Lecteur de disque optique

(30) Priority: 22.08.2005 JP 2005239572
(43) Date of publication of application: 09.05.2007
(73) Proprietor: Funai Electric Co., Ltd., Daito-shi Osaka 574-0013 (JP)
(72) Inventor: Shinmi, Tsukasa, Daito-shi Osaka 574-0013 (JP); Tanaka, Shinya, Daito-shi Osaka 574-0013 (JP)
(74) Representative: Beetz & Partner

(56) References cited:
- EP-A- 0 834 877
- JP-A- 8 249 808
- JP-A- 2002 281 724
- US-A- 4 218 065
- US-A- 4 514 839
- US-A1- 2002 163 870
- US-A1- 2004 114 497
- US-A1- 2004 228 227
- US-A1- 2005 010 942

## Description

### BACKGROUND OF THE INVENTION

### 1. Field of the Invention

The present invention relates to an optical disk drive for writing and reading data on an optical disk by irradiating the optical disk with a laser beam. In particular, the present invention relates to an optical disk drive that is capable of holding the optical disk securely.

### 2. Description of Related Art

Optical disks are used as recording media for recording and/or reading information such as picture data or sound data by irradiating the optical disk with a laser beam. As an optical disk, a CD (Compact Disc), a DVD (Digital Versatile Disc) or the like is used widely. An optical disk drive that uses such an optical disk as a recording medium rotates the optical disk and irradiates a recording surface of the optical disk with a laser beam, so as to read out information recorded on the optical disk or to record information on a recordable optical disk.

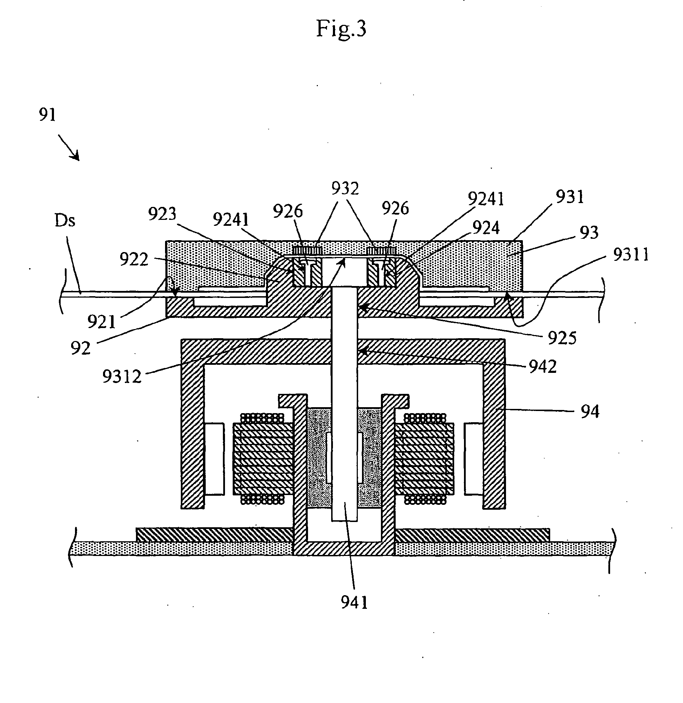

As a conventional example of this optical disk drive, there is one described in JP-A-2002-329357. Fig. 3 is a cross sectional view showing an example of an optical disk drive mechanism equipped to the conventional optical disk drive. A optical disk drive mechanism 91 shown in Fig. 3 includes a turntable 92 and a clamp 93 that retains the optical disk Ds between the turntable 92 and the clamp 93. The turntable 92 is made of an integrally-molded plastic, which is fixed to a drive shaft 941 of a motor 94. The turntable 92 is driven by the motor 94 so as to rotate.

The turntable 92 shown in Fig. 3 includes an optical disk placement portion 921 on which the optical disk Ds is placed, a through portion 922 that fits in an engaging hole formed at the center of the optical disk Ds, an insertion hole 923 formed in the through portion 922 and a clamper yoke 924 that receives a magnetic force (an attracting force) from a permanent magnet 932 fixed to the clamp 93. A through hole 925 is formed at the center of the turntable 92, and the drive shaft 941 of the motor 94 is fitted in the through hole 925 to be fixed.

The bottom face of the insertion hole 923 of the turntable 92 is provided with a plurality of bosses 926, while the clamper yoke 924 is provided with boss holes 9241 at positions corresponding to the bosses 926. The clamper yoke 924 is set in the insertion hole 923 so that the bosses 926 penetrate the boss holes 9241, and then tips of the bosses 926 are heated to melt. When the melted resin is hardened, the clamper yoke 924 is fixed in the insertion hole 923. By this fusing and fixing, a drop off of the clamper yoke 924 from the insertion hole 923 can be prevented.

The drive shaft 941 of the motor 94 is fixed by press fit in the through hole 925. The turntable 92 is made of a resin while the drive shaft 941 is made of a metal. Therefore, the fixed state between the drive shaft 941 and the through hole 925 of the turntable 92 may become unstable due to a difference of expansion or contraction rate between them when environment such as temperature or humidity changes. In order to avoid this unstable fixed state, the drive shaft 941 is fixed to the turntable 92 in the through hole 925 using an adhesive. A groove is formed on the drive shaft 941, and the adhesive is filled in the groove. Then, the drive shaft 941 is pressed to fit in the through hole 925. In this way, migration of the adhesive is avoided during the press fit, and the drive shaft 941 is securely fixed to the turntable 92 using the adhesive.

As shown in Fig. 3, the clamp 93 includes a presser portion 931 and a clamper magnet 932. The presser portion 931 includes a pressing face 9311 that presses the upper face of the optical disk Ds and an engaging recess 9312 that engages the through portion 922 of the turntable 92. The clamper magnet 932 has a ring-like shape, which is fixed to the engaging recess 9312 securely so that it does not drop off.

The motor 94 and the turntable 92 are attached to a traverse chassis. When the optical disk is inserted, the traverse chassis rises so that the optical disk Ds is lifted by the turntable 92. After that, the optical disk Ds is held between the turntable 92 and the clamp 93. On this occasion, the optical disk Ds is securely held between the turntable 92 and the clamp 93 by a magnetic force (an attracting force) generated between the clamper magnet 932 and the clamper yoke 924.

In order to press the drive shaft 941 to fit in the through hole 925 of the turntable 92 and to adhere them to each other in the conventional optical disk drive as described above, it is necessary to form a groove on the drive shaft 941 for preventing migration of the adhesive during the press fit as described above. In addition, although the turntable 92 and the drive shaft 941 are adhered to each other, the adhered state between the turntable 92 and the drive shaft 941 may become unstable when the temperature, humidity or other environment changes and the adhesive becomes melted.

In addition, when the clamper yoke 924 is fixed in the insertion hole 923 of the turntable 92, the clamper yoke 924 is set so that the bosses 926 formed in the insertion hole 923 penetrate the boss holes 9241 formed on the clamper yoke 923, and the bosses 926 are fused and fixed. Therefore, the positioning of the clamper yoke 924 as well as the fusing of the bosses 926 takes much labor and time.

In addition, in order to hold the optical disk between the clamp 93 and the turntable 92, a magnetic force (an attracting force) is utilized, which works between the clamper magnet 932 attached to the clamp 93 and the clamper yoke 924 attached to the turntable 92. This magnetic force may give a bad influence to the motor 94. More specifically, the motor 94 has a structure in which a coil rotates in a magnetic field generated by the permanent magnet. Therefore, if another magnetic field works externally, an accuracy of rotation may be decreased.

Document JP2002 281724A1 describes an optical disk drive according to the preamble of claim 1. This document discloses a turntable having a metallic protruding portion which is pressed to fit against the drive shaft of the motor and which is capable of holding an optical disk securely by means of a clamping mechanism. Furthermore, document US 2002/0163870 A1 teaches an optical disc drive with a multipart turntable having a tip made of ferromagnetic material such as iron, and document US 2004/114497 A1 discloses a disc drive having a metallic turntable.which is at the same time also the rotor. The track of the rotor has a plurality of horizontal portions having a stepped difference by drawing process.

### SUMMARY OF THE INVENTION

An object of the present invention is to provide an optical disk drive with a clamp mechanism for holding an optical disk between a clamp and a turntable to drive the same, which can be manufactured in a short time at a low cost by reducing the number of components and manufacturing steps.

Another object of the present invention is to provide an optical disk drive with a clamp mechanism for holding an optical disk between a clamp and a turntable to drive the same, which can reduce an influence of the magnetic force that works between the clamp and the turntable to the motor without using a special member, so that the motor can rotate stably and smoothly with a high accuracy .

According to a first aspect of the present invention, an optical disk derive for recording or reading data on an optical disk by irradiating the optical disk with a laser beam is provided. It includes a turntable for supporting and rotating the optical disk, a clamp for holding the optical disk in such a way that the optical disk is sandwiched between the turntable and the clamp, and a motor for driving the turntable to rotate. The turntable, which is structured to press the recording face side of the optical disk so that the optical disk is sandwiched between the clamp and the turntable when the optical disk is inserted, includes an optical disk placement portion for placing the optical disk, a protruding portion that protrudes from the center of the optical disk placement portion, and a plastic holding portion that is fixed to the outer face of the protruding portion and engages a center hole of the optical disk. A plurality of bosses provided to the holding portion are inserted into a plurality of boss holes provided to the optical disk placement portion, and tip portions of the bosses are fused so that the holding portion is fixed to the optical disk placement portion. The clamp includes a presser portion with a pressing face that contacts with a side of the optical disk opposite to the side that contacts with the turntable, an engaging recess that engages the holding portion and a ring-like clamper magnet that is fixed to the engaging recess. The optical disk placement portion and the protruding portion of the turntable may be made of a magnetic metal plate integrally by a drawing process, and, preferably, a drive shaft of the motor is pressed to fit in and fixed to the turntable.

According to this structure, the optical disk placement portion and the protruding portion of the turntable may be made of a metal plate by a drawing process, so the process for manufacturing the component is easier than integral molding of a plastic.

In addition, since the protruding portion is preferably made of a magnetic metal plate by a drawing process, a yoke that is attached to the turntable in the conventional structure becomes needless. Thus, structural members can be reduced.

In addition, since the optical disk placement portion of the turntable is preferably made of a magnetic metal plate, a magnetic field formed by the clamper magnet that is provided to the clamp can be shielded when the optical disk is sandwiched between the clamp and the turntable so that an influence of the magnetic field to the motor is suppressed.

According to a second aspect of the present invention, an optical disk drive for recording or reading data on an optical disk by irradiating the optical disk with a laser beam is provided. It includes a turntable for placing and rotating the optical disk, a clamp for holding the optical disk in such a way that the optical disk is sandwiched between the turntable and the clamp, and a motor for driving the turntable to rotate. The turntable, which is structured to press the recording face side of the optical disk so that the optical disk is sandwiched between the clamp and the turntable when the optical disk is inserted, includes an optical disk placement portion for placing the optical disk, a protruding portion that protrudes from the center of the optical disk placement portion, and/or a plastic holding portion that is fixed to the outer face of the protruding portion and engages a center hole of the optical disk, a plurality of bosses provided to the holding portion may be inserted into a plurality of boss holes provided to the optical disk placement portion, and tip portions of the bosses may be fused so that the holding portion is fixed to the optical disk placement portion. Preferably, the clamp includes a presser portion with a pressing face that contacts with a side of the optical disk opposite to the side that contacts with the turntable, an engaging recess that engages the holding portion and a ring-like clamper magnet that is fixed to the engaging recess. The optical disk placement portion and the protruding portion of the turntable may be made of a magnetic metal integrally, and a drive shaft of the motor is pressed to fit in and fixed to the turntable.

According to this structure, the optical disk placement portion and the protruding portion of the turntable are preferably made of a magnetic metal integrally, so the process for manufacturing the component is easier than integral molding of a plastic.

In addition, since the protruding portion is preferably made of a magnetic metal, a yoke that is attached to the turntable in the conventional structure becomes needless. Thus, structural members can be reduced.

In addition, since the optical disk placement portion of the turntable is preferably made of a magnetic metal, a magnetic field formed by the clamper magnet that is provided to the clamp can be shielded when the optical disk is sandwiched between the clamp and the turntable so that an influence of the magnetic field to the motor is suppressed.

In the above-mentioned structure, it is preferable that the optical disk placement portion and the protruding portion of the turntable be made of a magnetic metal plate integrally by a drawing process. In addition, instead of the drawing process, other processes for shaping a magnetic metal may be adopted widely.

According to the present invention, it is possible to provide an optical disk drive including a clamp mechanism for holding an optical disk between a clamp and a turntable to rotate the same, which can be manufactured in a short time at a low cost by reducing the number of components and manufacturing steps.
In addition, according to the present invention, it is possible to provide an optical disk drive including a clamp mechanism for holding an optical disk between a clamp and a turntable to rotate the same, which can reduce an influence of the magnetic force that works between the clamp and the turntable to the motor without using a special member, so that the motor can rotate stably and smoothly with a high accuracy.

### BRIEF DESCRIPTION OF THE DRAWINGS

Fig. 1 is a block diagram showing a structure of an optical disk drive according to an example of the present invention.
Fig. 2 is a cross sectional view showing an example of an optical disk drive mechanism that is provided to the optical disk drive according to the example of the present invention.
Fig. 3 is a cross sectional view of an optical disk drive mechanism that is provided to a conventional optical disk drive.

### DESCRIPTION OF THE PREFERRED EMBODIMENTS

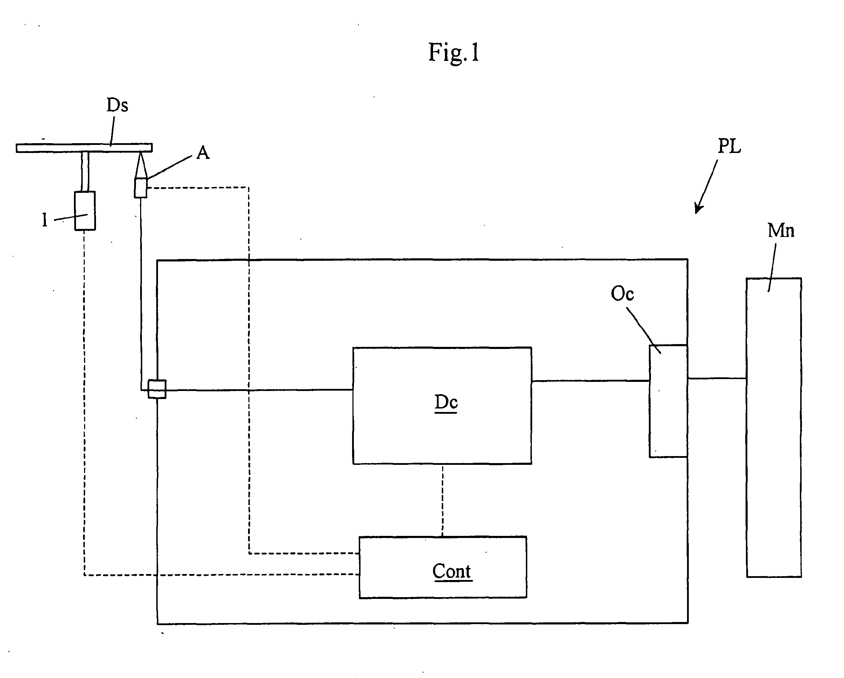

Now, an example of the present invention will be described with reference to the attached drawings. Fig. 1 is a block diagram showing a structure of an optical disk drive according to the example of the present invention. The optical disk drive shown in Fig. 1 is a DVD player, but an application of the present invention is not limited to a DVD player. A DVD player PL shown in Fig. 1 includes an optical disk drive mechanism 1 for rotating an optical disk (a DVD recording medium) Ds, an optical head A for reading information from the optical disk Ds by irradiating the optical disk Ds with a light beam, a decoder Dc for decoding a signal detected by the optical head A, an external connection portion Oc for connection with a monitor Mn that is an external display device and a control portion Cont.

The DVD player PL is controlled by the control portion Cont. When a user issues a command for reproducing information recorded on a DVD, the optical disk drive mechanism 1 first drives the optical disk Ds to rotate. The rotating optical disk Ds is irradiated with a laser beam emitted from the optical head A, and its reflection light is detected by the optical head A. The optical head A includes a light reception element for transforming the detected light into an electric signal, and its output electric signal is sent to the decoder Dc. The decoder Dc decodes the input electric signal into a video signal, which is sent to the monitor Mn via the external connection portion Oc. The monitor Mn displays a picture in accordance with the given video signal.

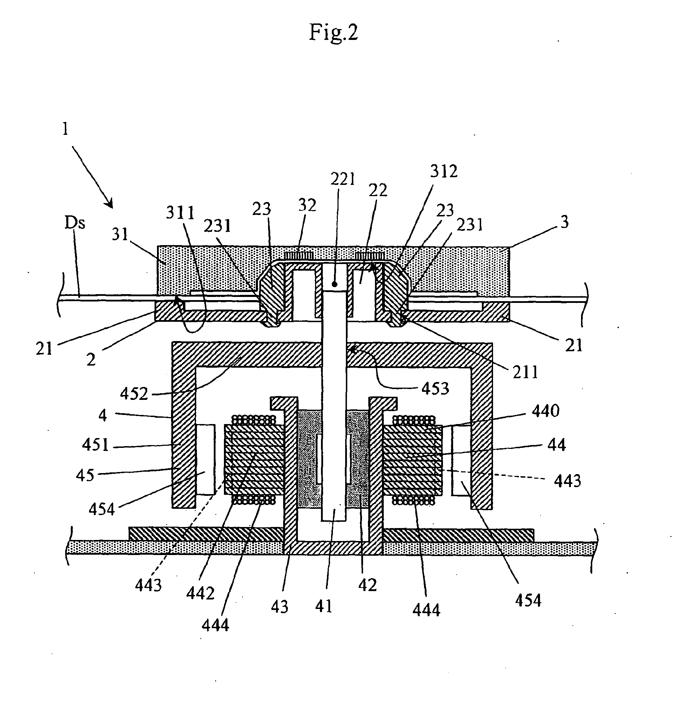

Fig. 2 is a cross sectional view showing an example of an optical disk drive mechanism that is provided to the optical disk drive according to the example of the present invention. The optical disk drive mechanism 1 shown in Fig. 2 includes a turntable 2 for supporting the optical disk Ds, a clamp 3 for holding the optical disk Ds in such a way that the optical disk Ds is sandwiched between the turntable 2 and the clamp 3, and a motor 4 for rotating the turntable 2.

As shown in Fig. 2, the turntable 2 includes an optical disk placement portion 21 for placing the optical disk Ds, a protruding portion 22 that protrudes from the center of the optical disk placement portion 21 in the axial direction, and a plastic holding portion 23 that is fixed to the outer face of the protruding portion 22 and engages a center hole of the optical disk Ds.

The optical disk placement portion 21 and the protruding portion 22 of the turntable 2 are made of a magnetic metal plate integrally by a drawing process. However, the present invention is not limited to this structure. The optical disk placement portion 21 is provided with a plurality of boss holes 211 that are arranged in a predetermined pitch in a circumferential direction around the center axis of the turntable 2. The holding portion 23 is made of a plastic (resin) so that the inner edge portion of the optical disk Ds is not chipped when the holding portion 23 engages the center hole of the optical disk Ds. However, the present invention is not limited to this structure.

A face of the holding portion 23 that contacts with the optical disk placement portion 21 is provided with a plurality of bosses 231. The plurality of bosses 231 are formed on positions corresponding to the positions of the boss holes 211 formed in the optical disk placement portion 21. The holding portion 23 is set to engage the outside of the protruding portion 22 in such a way that the plurality of bosses 231 are inserted in the corresponding boss holes 211, and then tip portions of the bosses 231 protruding from the boss holes 211 are heated and fused so that the holding portion 23 is fixed to the optical disk placement portion 21 and the protruding portion 22. An insertion hole 221 is formed in the center of the protruding portion 22, so that a rotation shaft 41 of the motor 4 that will be described later is inserted in the insertion hole 221.

The motor 4 includes a rotation shaft 41 that is fixed to the turntable 2, a bearing 42 for retaining the rotation shaft 41 in a rotatable manner, a housing 43 that houses the bearing 42, a laminated core 44 that is fixed to the outside of the housing 43 and a cylindrical rotor 45 that is fixed to the rotation shaft 41. Although a type of a plain bearing is shown as the bearing 42 in Fig. 2, the bearing 42 is not limited to this structure. Various types of bearings that can support the rotation shaft 41 so that it can rotate stably may be adopted. In addition, the rotation shaft 41 is pressed to fit in the insertion hole 221 formed in the protruding portion 22 of the turntable 2, and the rotation shaft 41 is fixed to the turntable 2 securely.

The laminated core 44 includes nine coil winding portions 442 protruding from a cylindrical portion outward in the radial direction. The coil winding portions 442 are arranged at a predetermined interval in the circumferential direction. A peripheral portion of the coil winding portions 442 is provided with an edge plate 443 extending in the circumferential direction. Coils 444 are wound around the coil winding portions 442. The laminated core 44 is made of a plurality of metal core plates 440 laminated and glued with insulators between neighboring core plates 440. Since the insulator is sandwiched between neighboring core plates 440 for the lamination, generation of eddy current can be reduced so that energy loss can be reduced.

The rotor 45 includes a cylindrical curved face portion 451 and a flat face portion 452 that closes an end of the curved face portion 451, and a through hole 453 is formed at the center of the flat face portion 452. The rotation shaft 41 is pressed to fit in the through hole 453 to be fixed. A permanent magnet 454 is fixed to the inside of the curved face portion 451.

When a plurality of coils 444 wound around the coil winding portions 442 of the laminated core 44 are supplied with electric current at a predetermined timing sequentially, a rotating magnetic field is generated. The permanent magnet 454 rotates in synchronization with the rotating magnetic field, so that the rotor 45 rotates. The rotation of the rotor 45 rotates the turntable 2 via the rotation shaft 41, so that the optical disk Ds supported and held on the turntable 2 rotates.

The clamp 3 includes a presser portion 31 and a clamper magnet 32 as shown in Fig. 2. The presser portion 31 includes a pressing face 311 that contacts with the upper surface of the optical disk Ds and an engaging recess 312 that engages the holding portion 23 that is fixed to the turntable 2. The clamper magnet 32 has a ring-like shape and is fixed to the engaging recess 312 securely so that it does not drop off.

The clamp 3 is supported by a supporting member (not shown) in a rotatable manner. The optical disk Ds is held between the clamp 3 and the turntable 2 securely by a magnetic force (an attracting force) that works between the protruding portion 22 of the turntable 2 made of a magnetic metal plate and the clamper magnet 32. Thus, a slip or a slide of the optical disk Ds from the optical disk placement portion 21 of the turntable 2 can be prevented when the turntable 2 starts or stops to rotate.

The operation of the clamp 3 and the turntable 2 when they hold the optical disk Ds between them is as follows. The turntable 2 is attached to the traverse chassis (not shown), and the traverse chassis approaches or retreats with respect to the clamp 3 in accordance with insertion or ejection of the optical disk.

When the optical disk Ds is inserted in the optical disk drive, the traverse chassis approaches to the clamp 3 at a predetermined timing. When the optical disk Ds moves to a data read/write position, the protruding portion 22 and the holding portion 23 of the turntable 2 are inserted in the center hole formed in the optical disk Ds, and the optical disk placement portion 21 lifts the optical disk Ds.

When the traverse chassis further moves, the protruding portion 22 is attracted to the clamper magnet 32 by the magnetic force (an attracting force) between the protruding portion 22 made of a magnetic metal plate and the clamper magnet 32 of the clamp 3. When the protruding portion 22 is attracted to the clamper magnet 32, the optical disk Ds is held securely between the optical disk placement portion 21 of the turntable 2 and the pressing face 311 of the clamp 3 so that it does not slip.

Since the optical disk placement portion 21 and the protruding portion 22 of the turntable 2 are made of a magnetic metal plate integrally, the magnetic field formed by the clamper magnet 32 is shielded so as not to affect the motor 4. Thus, operation of the motor 4 is not disturbed by the magnetic field of the clamper magnet 32, thereby smooth and accurate drive of the motor 4 can be secured.

Note that the optical disk drive according to the present invention may be a tray type that uses a disk tray for inserting or ejecting an optical disk or may be a slot-in type in which an optical disk is inserted directly into a slot.

Although the optical disk placement portion 21 and the protruding portion 22 of the turntable 2 are made of a magnetic metal plate by a drawing process in the example described above, a method of process is not limited to the drawing process. Various plastic working methods in which a shape after the process is maintained can be adopted widely. In addition, it is possible to combine the optical disk placement portion 21 and the protruding portion 22 made of a metal individually to be one body. Furthermore, it is possible to adopt various methods such as compression molding of a powder material, casting, forging or the like in which the shape of the turntable 2 having ferromagnetism can be formed.

The optical disk drive according to the present invention can be widely used as an optical disk drive for reading or writing information on an optical disk such as a CD or a DVD by irradiating the optical disk with a laser beam.

## Claims

1. An optical disk drive including:
- a turntable (2) for placing and rotating the optical disk (Ds),
- a clamp (3) for holding the optical disk in such a way that the optical disk is sandwiched between the turntable (2) and the clamp (3), and
- a motor (4) for driving the turntable to rotate, for recording or reading data on an optical disk by irradiating the optical disk with a laser beam,
the turntable (2), which is structured to press the recording face side of the optical disk so that the optical disk is sandwiched between the clamp (3) and the turntable (2) when the optical disk is inserted, including:
- an optical disk placement portion (21) for placing the optical disk,
- a protruding portion (22) that protrudes from the center of the optical disk placement portion (21), and
- a plastic holding portion (23) that is fixed to the outer face of the protruding portion (22) and engages a center hole of the optical disk,
wherein a drive shaft (41) of the motor (4) is pressed to fit in and fixed to the turntable (2),
the clamp (3) including:
- a presser portion (31) with a pressing face that contacts with a side of the optical disk opposite to the side that contacts with the turntable (2),
- an engaging recess (312) that engages the plastic holding portion (23) and a ring-like clamper magnet (32) that is fixed to the engaging recess (312),
**characterized in that**
the plastic holding portion (23) is provided with a plurality of bosses (231) being inserted into a plurality of boss holes (211) provided to the optical disk placement portion (21), and tip portions of the bosses (231) being fused so that the plastic holding portion (23) is fixed to the optical disk placement pordon (21), and the optical disk placement portion (21) and the protruding portion (22) of the turntable (2) are made of a magnetic metal integrally.

2. The optical disk drive according to claim 1, **characterized in that** the optical disk placement portion (21) and the protruding portion (22) of the turntable (2) are made of a magnetic metal plate integrally by a drawing process.

## Patentansprüche

1. Optisches Plattenlaufwerk mit:
- einer Drehscheibe (2) zum Platzieren und Drehen der optischen Platte (Ds),
- einer Klemme (3) zum Halten der optischen Platte auf eine solche Weise, dass die optische Platte sandwichartig zwischen der Drehscheibe (2) und der Klemme (3) eingeschlossen ist, und
- einem Motor (4) zum Antreiben der Drehscheibe, so dass sie sich dreht, um Daten auf einer optischen Platte aufzuzeichnen oder zu lesen, indem die optische Platte mit einem Laserstrahl bestrahlt wird,
wobei die Drehscheibe (2), die so aufgebaut ist, dass sie so auf die Aufzeichnungsflächenseite der optischen Platte drückt, dass die optische Platte sandwichartig zwischen der Klemme (3) und der Drehscheibe (2) eingeschlossen ist, wenn die optische Platte eingefügt ist, einschließt:
- einen Optische-Platte-Platzierungsabschnitt (21) zum Platzieren der optischen Platte;
- einen vorstehenden Abschnitt (22), der von der Mitte des Optische-Platte-Platzierungsabschnitts (21) vorsteht, und
- einen Kunststoffhalteabschnitt (23), der an der Außenfläche des vorstehenden Abschnitts (22) befestigt ist und in ein Mittelloch der optischen Platte eingreift,
- mehrere Buckel (231),
wobei eine Antriebswelle (41) des Motors (4) in die Drehscheibe (2) eingepresst und an ihr befestigt wird,
wobei die Klemme (3) einschließt:
- einen Presserabschnitt (31) mit einer Pressfläche, die eine Seite der optischen Platte gegenüber der Seite, die mit der Drehscheibe (2) in Kontakt ist, berührt,
- eine Eingriffsvertiefung (312), die in den Kunststoffhalteabschnitt (23) eingreift, und einen ringartigen Klammermagneten (32), der an der Eingriffsvertiefung (312) befestigt ist,
**dadurch gekennzeichnet, dass**
der Kunststoffhalteabschnitt (23) vorgesehen ist, indem er in mehrere Buckellöcher (211) eingefügt ist, die am Optische-Platte-Platzierungsabschnitt (21) vorgesehen sind, und Spitzenabschnitte der Buckel (231) so verschmolzen sind, dass der Kunststoffhalteabschnitt (23) an dem Optische-Platte-Platzierungsabschnitt (21) befestigt ist, und
der Optische-Platte-Platzierungsabschnitt (21) und der vorstehende Abschnitt (22) der Drehscheibe (2) einstückig aus einem magnetischen Metall hergestellt sind.

2. Optisches Plattenlaufwerk nach Anspruch 1, **dadurch gekennzeichnet, dass** der Optische-Platte-Platzierungsabschnitt (21) und der vorstehende Abschnitt (22) der Drehscheibe (2) durch ein Ziehverfahren einstückig aus einer magnetischen Metallplatte hergestellt sind.

## Revendications

1. Lecteur de disque optique comportant :
- un plateau tournant (2) permettant de positionner et de mettre en rotation le disque optique (Ds),
- un élément de serrage (3) permettant de maintenir le disque optique de telle sorte que le disque optique soit pris en sandwich entre le plateau tournant (2) et l'élément de serrage (3), et
- un moteur (4) permettant de commander la rotation du plateau tournant, d'enregistrer ou de lire des données sur un disque optique en irradiant le disque optique à l'aide d'un faisceau laser,
le plateau tournant (2), lequel est structuré de manière à appliquer une pression sur le côté de la face d'enregistrement du disque optique de telle sorte que le disque optique soit pris en sandwich entre l'élément de serrage (3) et le plateau tournant (2) quand le disque optique est inséré, comportant lui-même :
- une partie de positionnement de disque optique (21) permettant de positionner le disque optique,
- une partie en saillie (22) qui se présente en saillie par rapport au centre de la partie de positionnement de disque optique (21), et
- une partie de maintien en plastique (23) qui est fixée sur la face extérieure de la partie en saillie (22) et s'engage avec un trou central du disque optique,
dans lequel un arbre d'entraînement (41) du moteur (4) s'emboîte par pression dans le plateau tournant (2) et est fixé sur celui-ci, l'élément de serrage (3) comportant :
- une partie de pression (31) avec une face de pression qui entre en contact avec un côté du disque optique opposé au côté qui entre en contact avec le plateau tournant (2),
- un évidement d'engagement (312) qui engage la partie de maintien en plastique (23) et un aimant de serrage en forme d'anneau (32) qui est fixé à l'évidement d'engagement (312),
**caractérisé en ce que**
la partie de maintien en plastique (23) est munie d'une pluralité de bosses (231) insérées dans une pluralité de trous de bosse (211) fournis sur la partie de positionnement de disque optique (21), et les parties d'extrémité des bosses (231) sont soudées de sorte que la partie de maintien en plastique (23) soit fixée sur la partie de positionnement de disque optique (21), et la partie de positionnement de disque optique (21) et la partie en saillie (22) du plateau tournant (2) sont constituées intégralement d'un métal magnétique.

2. Le lecteur de disque optique selon la revendication 1, **caractérisé en ce que** la partie de positionnement de disque optique (21) et la partie en saillie (22) du plateau tournant (2) sont composées intégralement d'une plaque métallique magnétique obtenue grâce à un processus d'étirage.
